# EUROPEAN PATENT SPECIFICATION

(11) **EP 2 935 832 B1**
(45) Date of publication and mention of the grant of the patent: **23.04.2025**
(21) Application number: 13864432.3
(22) Date of filing: 10.12.2013
(51) Int. Cl.: F02C 7/08, F02C 7/12, F28D 15/02, F02C 7/14

(54) **GAS TURBINE ENGINES WITH OSCILLATING HEAT PIPE FOR THERMAL MANAGEMENT**
GASTURBINENMOTOR MIT OSZILLIERENDEM WÄRMEROHR ZUR WÄRMEVERWALTUNG
TURBINE À GAZ AVEC CALODUC OSCILLANT POUR GESTION THERMIQUE

(30) Priority: 18.12.2012 US 201213718115
(43) Date of publication of application: 28.10.2015
(73) Proprietor: RTX Corporation, Farmington, CT 06032 (US)
(72) Inventor: HERRING, Neal R., East Hampton, Connecticut 06424 (US)
(74) Representative: Dehns
(86) International application number: PCT/US2013/074078
(87) International publication number: WO 2014/099482

(56) References cited:
- EP-A2- 1 895 124
- US-A1- 2004 020 213
- US-A1- 2005 050 877
- US-A1- 2008 141 954
- US-A1- 2008 141 954
- US-A1- 2008 310 955
- US-A1- 2008 310 955
- US-A1- 2010 000 217
- US-A1- 2012 243 970
- KHANDEKAR SAMEER: "Thermo-hydrodynamics of closed loop heat pulsating heat pipes", 19 July 2004 (2004-07-19), pages 1 - 76, XP002578411, Retrieved from the Internet <URL:http://elib.uni-stuttgart.de/opus/volltexte/2004/1939/pdf/Diss_Khandekar.pdf> [retrieved on 20100430]

## Description

### BACKGROUND OF THE INVENTION

Heat transfer devices, including heat exchangers, can be employed to transfer heat between various fluids and components in a gas turbine engine. For example, a heat exchanger can be employed to transfer excess heat from an oil system and/or an air system to a desired heat sink, often fuel or fan air. The heat exchanger can be bulky and difficult to position within the gas turbine engine due to its size. When fan air is used as the heat sink, an additional drag penalty can be incurred. This can become more significant as the fan pressure ratio is reduced because the allowable pressure drop in the heat exchanger decreases.

Known heat transfer devices are disclosed in "Thermo-hydrodynamics of Closed Loop Pulsating Heat Pipes", a dissertation by Sameer Khandekar, and EP 1895124. US 2008/310955 discloses a hybrid cooling system for a gas turbine engine.

### SUMMARY OF THE INVENTION

According to a first aspect of the present invention, there is provided a gas turbine engine as defined by claim 1.

According to a second aspect of the present invention, there is provided a method of cooling a first fluid in a gas turbine engine as defined by claim 6.

These and other features of the present invention can be best understood from the following specification and drawings, the following of which is a brief description.

### BRIEF DESCRIPTION OF THE DRAWINGS

Figure 1 illustrates a schematic view of an embodiment of a gas turbine engine;
Figure 2 illustrates a schematic view of an oscillating heat pipe; and
Figure 3 illustrates a schematic view of the oscillating heat pipe in the gas turbine engine.

### DETAILED DESCRIPTION OF THE PREFERRED EMBODIMENTS

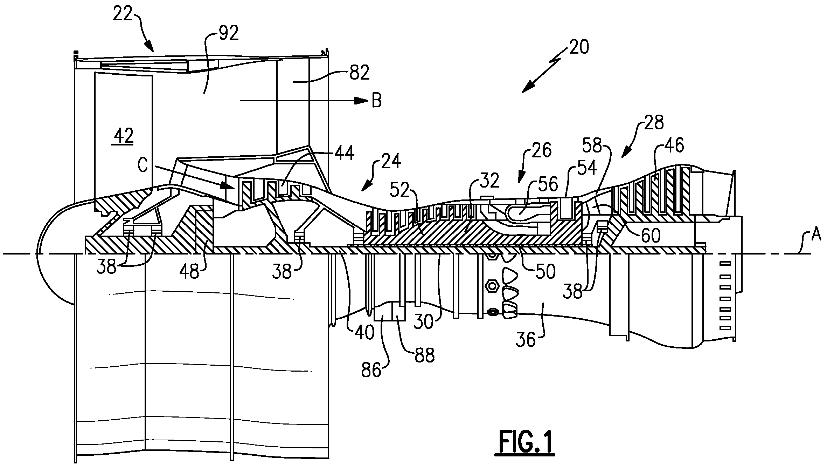

Figure 1 schematically illustrates an example gas turbine engine 20 that includes a fan section 22, a compressor section 24, a combustor section 26 and a turbine section 28. Alternative engines might include an augmenter section (not shown) among other systems or features. The fan section 22 drives air along a bypass flow path B while the compressor section 24 draws air in along a core flow path C where air is compressed and communicated to the combustor section 26. In the combustor section 26, air is mixed with fuel and ignited to generate a high pressure exhaust gas stream that expands through the turbine section 28 where energy is extracted and utilized to drive the fan section 22 and the compressor section 24.

Although the disclosed non-limiting embodiment depicts a geared turbofan gas turbine engine, it should be understood that the concepts described herein are not limited to use with geared turbofans as the teachings may be applied to other types of traditional turbine engines. For example, the gas turbine engine 20 can have a three-spool architecture in which three spools concentrically rotate about a common axis and where a low spool enables a low pressure turbine to drive a fan via a gearbox, an intermediate spool that enables an intermediate pressure turbine to drive a first compressor of the compressor section, and a high spool that enables a high pressure turbine to drive a high pressure compressor of the compressor section.

The example gas turbine engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided.

The low speed spool 30 generally includes an inner shaft 40 that connects a fan 42 and a low pressure (or first) compressor section 44 to a low pressure (or first) turbine section 46. The inner shaft 40 drives the fan 42 through a speed change device, such as a geared architecture 48, to drive the fan 42 at a lower speed than the low speed spool 30. The high-speed spool 32 includes an outer shaft 50 that interconnects a high pressure (or second) compressor section 52 and a high pressure (or second) turbine section 54. The inner shaft 40 and the outer shaft 50 are concentric and rotate via the bearing systems 38 about the engine central longitudinal axis A.

A combustor 56 is arranged between the high pressure compressor 52 and the high pressure turbine 54. In one example, the high pressure turbine 54 includes at least two stages to provide a double stage high pressure turbine 54. In another example, the high pressure turbine 54 includes only a single stage. As used herein, a "high pressure" compressor or turbine experiences a higher pressure than a corresponding "low pressure" compressor or turbine.

The example low pressure turbine 46 has a pressure ratio that is greater than about 5. The pressure ratio of the example low pressure turbine 46 is measured prior to an inlet of the low pressure turbine 46 as related to the pressure measured at the outlet of the low pressure turbine 46 prior to an exhaust nozzle.

A mid-turbine frame 58 of the engine static structure 36 is arranged generally between the high pressure turbine 54 and the low pressure turbine 46. The mid-turbine frame 58 further supports bearing systems 38 in the turbine section 28 as well as setting airflow entering the low pressure turbine 46.

The air in the core flow path C is compressed by the low pressure compressor 44 then by the high pressure compressor 52 mixed with fuel and ignited in the combustor 56 to produce high speed exhaust gases that are then expanded through the high pressure turbine 54 and low pressure turbine 46. The mid-turbine frame 58 includes vanes 60, which are in the core flow path C and function as an inlet guide vane for the low pressure turbine 46. Utilizing the vane 60 of the mid-turbine frame 58 as the inlet guide vane for low pressure turbine 46 decreases the length of the low pressure turbine 46 without increasing the axial length of the mid-turbine frame 58. Reducing or eliminating the number of vanes in the low pressure turbine 46 shortens the axial length of the turbine section 28. Thus, the compactness of the gas turbine engine 20 is increased and a higher power density may be achieved.

The disclosed gas turbine engine 20 in one example is a high-bypass geared aircraft engine. In a further example, the gas turbine engine 20 includes a bypass ratio greater than about six (6), with an example embodiment being greater than about ten (10). The example geared architecture 48 is an epicyclical gear train, such as a planetary gear system, star gear system or other known gear system, with a gear reduction ratio of greater than about 2.3.

In one disclosed embodiment, the gas turbine engine 20 includes a bypass ratio greater than about ten (10:1) and the fan diameter is significantly larger than an outer diameter of the low pressure compressor 44. It should be understood, however, that the above parameters are only exemplary of one embodiment of a gas turbine engine including a geared architecture and that the present disclosure is applicable to other gas turbine engines.

A significant amount of thrust is provided by the air in the bypass flow path B due to the high bypass ratio. The fan section 22 of the engine 20 is designed for a particular flight condition -- typically cruise at about 0.8 Mach and about 35,000 feet (about 10,700 metres). The flight condition of 0.8 Mach and 35,000 ft (10,700 m), with the engine at its best fuel consumption - also known as "bucket cruise Thrust Specific Fuel Consumption ('TSFC')" - is the industry standard parameter of poundmass (Ibm) of fuel per hour being burned divided by pound-force (lbf) of thrust the engine produces at that minimum point.

"Low fan pressure ratio" is the pressure ratio across the fan blade alone, without a Fan Exit Guide Vane ("FEGV") system. The low fan pressure ratio as disclosed herein according to one non-limiting embodiment is less than about 1.50. In another non-limiting embodiment the low fan pressure ratio is less than about 1.45.

The example gas turbine engine includes the fan 42 that comprises in one non-limiting embodiment less than about 26 fan blades. In another non-limiting embodiment, the fan section 22 includes less than about 20 fan blades. Moreover, in one disclosed embodiment the low pressure turbine 46 includes no more than about 6 turbine rotors schematically indicated at 34. In another non-limiting example embodiment the low pressure turbine 46 includes about 3 turbine rotors. A ratio between the number of fan blades and the number of low pressure turbine rotors is between about 3.3 and about 8.6. The example low pressure turbine 46 provides the driving power to rotate the fan section 22 and therefore the relationship between the number of turbine rotors 34 in the low pressure turbine 46 and the number of blades in the fan section 22 disclose an example gas turbine engine 20 with increased power transfer efficiency.

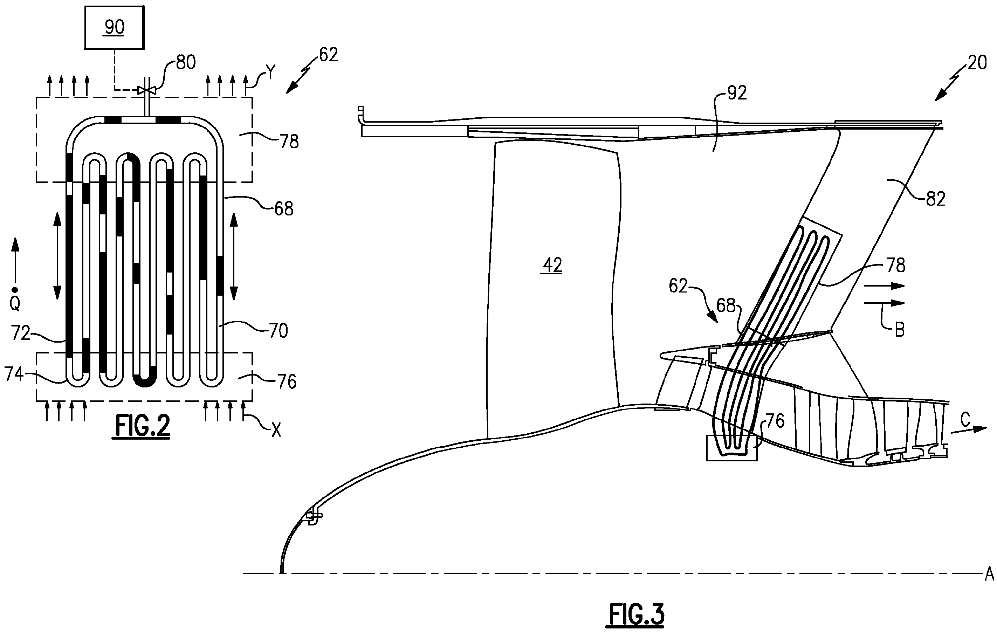

Figure 2 illustrates an oscillating heat pipe 62 that is employed to transfer heat from the gas turbine engine 20. The oscillating heat pipe 62 is a passive heat transfer device that can transport heat over a relatively long distance (for example, more than 10 inches, or 25.4 centimetres). The oscillating heat pipe 62 can be used with or integrated into existing engine structures, as explained below.

The oscillating heat pipe 62 includes a series of meandering, hermetically sealed channels 68 having a capillary dimension that define a continuous sealed loop. The oscillating heat pipe 62 is filled with a working fluid 70 in a bi-phase. In one example, the fluid 70 is one of glycol, water, alcohol, refrigerant, or a mixture of any of these fluids. The channels 68 may be circular, semi-circular, square, or have any other cross-sectional shape. The hydraulic diameter of the channels 68 depends on the fluid 70 employed. A pressure difference between the fluid 70 in an evaporator 76 and the fluid 70 in a condenser 78 drives the fluid 70 (which includes liquid slugs 72 and vapor plugs 74) to move through the oscillating heat pump 62 and between the evaporator 76 to the condenser 78 to transport heat.

As shown in Figure 3, the evaporator 76 accepts heat from a first fluid X (oil or air) located in or near the engine core. The engine core includes the high pressure compressor 52. The evaporator 76 accepts heat from oil of an oil system 86 that lubricates the bearing system 38, oil from a gearbox or geared architecture 48, or heated bleed air from the high pressure compressor 52 (shown in Figure 2). If heat is transferred from the oil system 86, a small liquid-liquid heat exchanger (not shown) can be used to transfer heat from the oil in the oil system 86 to the evaporator 76 of the oscillating heat pipe 62.

The condenser 78 rejects heat to a second fluid Y located outwardly of the engine core. The condenser 78 rejects heat to fuel in a fuel system 88. The condenser 78 is located on a surface of a fan exit guide vane 82. The channels 68 can be formed in the structure of the fan duct 92 or the oscillating heat pipe 62 can be located inside the fan duct 92. The fan duct 92 has a large surface area to allow for the rejection of heat from the first fluid X to the second fluid Y.

When the liquid slugs 72 and the vapor plugs 74 enter the evaporator 76, the liquid slugs 72 and the vapor plugs 74 accept heat from the first fluid X in or near the engine core of the gas turbine engine 20, adding heat Q to the fluid 70 and cooling the first fluid X. The increase in temperature and pressure of the fluid 70 in the evaporator 76 forces the liquid slugs 72 and the vapor plugs 74 to move towards the condenser 78. In the condenser 78, the fluid 70 rejects the heat to the second fluid Y located outwardly of the engine core, and the temperature and the pressure of the fluid 70 decreases. The vapor plugs 74 in the condenser 78 do not collapse due to significant surface tension forces, which leads to a restoration force to initiate oscillations. The fluid 70 then travels back to the evaporator 76, completing the cycle.

During cruise conditions, the temperature in first fluid X in or near the engine core of the gas turbine engine 20 can exceed 300°F (149°C), and the temperature of second fluid Y outwardly of the engine core can be approximately -34°F (-37°C). The oscillating heat pipe 62 can transfer this heat from the first fluid X to the second fluid Y.

The oscillating heat pipe 62 also includes a filling valve 80 that allows the fluid 70 to be added to the oscillating heat pipe 62 and evacuates any air in the channels 68 with a vacuum. Once the filling valve 80 is closed, the oscillating heat pipe 62 is sealed. Alternatively, the filling valve 80 may be connected to a pressure regulating system 90. By modulating the pressure of the working fluid 70 in the oscillating heat pipe 62 with the pressure regulating system 90, the performance can be controlled to compensate for changes in temperature in the evaporator 76 and the condenser 78.

By employing the oscillating heat pipe 62 to reject heat from the first fluid X to the second fluid Y, it is possible to reduce or eliminate some of the existing heat exchangers of the gas turbine engine 20. As the oscillating heat pipe 62 can be incorporated into existing structure of the gas turbine engine 20, there is little or no weight or pressure drop added to the gas turbine engine 20.

The oscillating heat pipe 62 provides many benefits. The oscillating heat pipe 62 has high effective thermal conductivity, provides fast thermal response and has a low cost. The oscillating heat pipe 62 can be made of any material, which allows a coefficient of thermal expansion of the components of the oscillating heat pipe 62 to match a coefficient of thermal expansion of the components of the gas turbine engine 20. The oscillating heat pipe 62 also has a reduced weight and a reduced volume compared to prior heat exchangers. Additionally, the oscillating heat pipe 62 is scalable, orientation-independent, and has a highg tolerance. The oscillating heat pipe 62 also functions if temporal and spatial pressure fluctuations are present in the system. A pump is also not needed to move the fluid through the channels 68. Finally, the oscillating heat pipe 62 can eliminate any combined weight and pressure drop penalties on the total engine fuel burn associated with current air-oil coolers by about 0.5%.

Although a gas turbine engine 20 with geared architecture 48 is described, the oscillating heat pipe 62 can be employed in a gas turbine engine without geared architecture.

The foregoing description is only exemplary of the principles of the invention. Many modifications and variations are possible in light of the above teachings. It is, therefore, to be understood that within the scope of the appended claims, the invention may be practiced otherwise than using the example embodiments which have been specifically described. For that reason the following claims should be studied to determine the true scope and content of this invention.

## Claims

1. A gas turbine engine (20) comprising:
a high pressure compressor (52);
an oscillating heat pipe (62) including an evaporator (76), a condenser (78), and a plurality of channels (68) that define a circuit of a continuous loop through which a working fluid (70) flows, wherein the condenser (78) is located on a surface of a fan exit guide vane (82);
a first fluid (X) that is at least one of oil from an oil system (86), oil from a gearbox (48), or bleed air from a high pressure compressor (52), wherein the first fluid (X) rejects heat to the working fluid (70) in the evaporator (76); and
a second fluid (Y) that is at least one of fuel from a fuel system (88) and air in a fan duct (92), wherein the working fluid (70) rejects heat to the fuel in the fuel system (88) or the air in the fan duct (92) in the condenser (78);
wherein, when the second fluid (Y) is air, the fan exit guide vane (82) is located in the fan duct (92), and the condenser (78) rejects heat to the air passing by fan exit guide vanes (82); and
wherein, when the second fluid (Y) is fuel from a fuel system (88), the condenser (78) rejects heat to the fuel in the fuel system (88).

2. The gas turbine engine as recited in claim 1, wherein a pressure difference between the working fluid (70) in the evaporator (76) and the working fluid (70) in the condenser (78) drives the working fluid (70) to move through the plurality of channels (68) to transport the heat between the condenser (78) and the evaporator (76).

3. The gas turbine engine as recited in claim 1 or claim 2 including a filling valve (80) to allow the working fluid (70) to be added to the channels (68), and wherein a pressure regulating system (90) is preferably connected to the filling valve (80) to allow a pressure of the working fluid (70) to be modulated to control the saturation point.

4. The gas turbine engine as recited in any of claims 1 to 3 wherein the plurality of channels (68) have a capillary dimension.

5. The gas turbine engine as recited in any of claims 1 to 4 wherein the working fluid (70) is in a bi-phase.

6. A method of cooling a first fluid in a gas turbine engine comprising the steps of:
providing an oscillating heat pipe (62) including a plurality of channels (68) that define a circuit of a continuous loop through which a working fluid flows;
flowing the working fluid (70) through an evaporator (76) of the oscillating heat pipe (62) to accept heat from a first fluid (X) located near or in an engine core; wherein the first fluid (X) is at least one of oil from an oil system (86), oil from a gearbox (48), or bleed air from a high pressure compressor (52), wherein the first fluid (X) rejects heat to the working fluid (70) in the evaporator; and
flowing the working fluid (70) through a condenser (78) of the oscillating heat pipe (62) to reject heat from the working fluid (70) into a second fluid (Y) located outwardly from the engine core; wherein the condenser (78) is located on a surface of a fan exit guide vane (82); and
wherein the second fluid (Y) is at least one of fuel from a fuel system (88) and air in a fan duct (92), and wherein, when the second fluid (Y) is air, the fan exit guide vane (82) is located in the fan duct (92), and the condenser (78) rejects heat to the air passing by fan exit guide vanes (82); wherein when the second fluid (Y) is fuel from a fuel system (88), the condenser (78) rejects heat to the fuel in the fuel system (88).

7. The method as recited in claim 6, including the step of regulating a pressure of the working fluid (70) in the oscillating heat pipe (62).

## Patentansprüche

1. Gasturbinentriebwerk (20), umfassend:
einen Hochdruckverdichter (52);
ein oszillierendes Wärmerohr (62), beinhaltend einen Verdampfer (76), einen Kondensator (78) und eine Vielzahl von Kanälen (68), die einen Kreislauf einer kontinuierlichen Schleife definieren, durch welche ein Arbeitsfluid (70) fließt, wobei sich der Kondensator (78) auf einer Oberfläche einer Leitschaufel (82) des Gebläseaustritts befindet;
ein erstes Fluid (X), das mindestens eines von Öl aus einem Ölsystem (86), Öl aus einem Getriebe (48) oder Zapfluft aus einem Hochdruckverdichter (52) ist, wobei das erste Fluid (X) Wärme an das Arbeitsfluid (70) in dem Verdampfer (76) abgibt; und
ein zweites Fluid (Y), das mindestens eines von Kraftstoff aus einem Kraftstoffsystem (88) und Luft in einem Gebläsekanal (92) ist, wobei das Arbeitsfluid (70) Wärme an den Kraftstoff in dem Kraftstoffsystem (88) oder die Luft in dem Gebläsekanal (92) in dem Kondensator (78) abgibt;
wobei, wenn das zweite Fluid (Y) Luft ist, sich die Leitschaufel (82) des Gebläseaustritts in dem Gebläsekanal (92) befindet und der Kondensator (78) Wärme an die Luft abgibt, die an Leitschaufeln (82) des Gebläseaustritts vorbeiströmt; und
wobei, wenn das zweite Fluid (Y) Kraftstoff aus einem Kraftstoffsystem (88) ist, der Kondensator (78) Wärme an den Kraftstoff in dem Kraftstoffsystem (88) abgibt.

2. Gasturbinentriebwerk nach Anspruch 1, wobei ein Druckunterschied zwischen dem Arbeitsfluid (70) in dem Verdampfer (76) und dem Arbeitsfluid (70) in dem Kondensator (78) das Arbeitsfluid (70) antreibt, sich durch die Vielzahl von Kanälen (68) zu bewegen, um die Wärme zwischen dem Kondensator (78) und dem Verdampfer (76) zu transportieren.

3. Gasturbinentriebwerk nach Anspruch 1 oder Anspruch 2, beinhaltend ein Füllventil (80), um zuzulassen, dass das Arbeitsfluid (70) den Kanälen (68) hinzugefügt wird, und wobei ein Druckregelsystem (90) bevorzugt mit dem Füllventil (80) verbunden ist, um zuzulassen, dass ein Druck des Arbeitsfluids (70) zum Steuern des Sättigungspunkts moduliert wird.

4. Gasturbinentriebwerk nach einem der Ansprüche 1 bis 3, wobei die Vielzahl von Kanälen (68) eine kapillare Abmessung aufweisen.

5. Gasturbinentriebwerk nach einem der Ansprüche 1 bis 4, wobei das Arbeitsfluid (70) zweiphasig ist.

6. Verfahren zum Kühlen eines ersten Fluids in einem Gasturbinentriebwerk, umfassend die folgenden Schritte:
Bereitstellen eines oszillierenden Wärmerohrs (62), beinhaltend eine Vielzahl von Kanälen (68), die einen Kreislauf einer kontinuierlichen Schleife definieren, durch welche ein Arbeitsfluid fließt;
Strömen des Arbeitsfluids (70) durch einen Verdampfer (76) des oszillierenden Wärmerohrs (62), um Wärme von einem ersten Fluid (X) aufzunehmen, das sich in der Nähe oder in einem Triebwerkskern befindet; wobei das erste Fluid (X) mindestens eines von Öl aus einem Ölsystem (86), Öl aus einem Getriebe (48) oder Zapfluft aus einem Hochdruckverdichter (52) ist, wobei das erste Fluid (X) Wärme an das Arbeitsfluid (70) in dem Verdampfer abgibt; und
Strömen des Arbeitsfluids (70) durch einen Kondensator (78) des oszillierenden Wärmerohrs (62), um Wärme aus dem Arbeitsfluid (70) in ein zweites Fluid (Y) abzugeben, das sich außen von dem Triebwerkskern befindet; wobei sich der Kondensator (78) auf einer Oberfläche einer Leitschaufel (82) des Gebläseaustritts befindet; und
wobei das zweite Fluid (Y) mindestens eines von Kraftstoff aus einem Kraftstoffsystem (88) und Luft in einem Gebläsekanal (92) ist, und wobei, wenn das zweite Fluid (Y) Luft ist, sich die Leitschaufel (82) des Gebläseaustritts in dem Gebläsekanal (92) befindet und der Kondensator (78) Wärme an die an den Leitschaufeln (82) des Gebläseaustritts vorbeiströmende Luft abgibt; wobei, wenn das zweite Fluid (Y) Kraftstoff aus einem Kraftstoffsystem (88) ist, der Kondensator (78) Wärme an den Kraftstoff in dem Kraftstoffsystem (88) abgibt.

7. Verfahren nach Anspruch 6, beinhaltend den Schritt zum Regeln eines Drucks des Arbeitsfluids (70) in dem oszillierenden Wärmerohr (62).

## Revendications

1. Turbine à gaz (20) comprenant :
un compresseur haute pression (52) ;
un caloduc oscillant (62) comprenant un évaporateur (76), un condenseur (78) et une pluralité de canaux (68) qui définissent un circuit d'une boucle continue à travers laquelle circule un fluide de travail (70), dans laquelle le condenseur (78) est situé sur une surface d'une aube directrice de sortie de ventilateur (82) ;
un premier fluide (X) qui est au moins l'un parmi de l'huile en provenance d'un système d'huile (86), de l'huile en provenance d'une boîte de vitesses (48) ou de l'air de prélèvement en provenance d'un compresseur haute pression (52), dans laquelle le premier fluide (X) rejette de la chaleur vers le fluide de travail (70) dans l'évaporateur (76) ; et
un second fluide (Y) qui est au moins l'un parmi du carburant en provenance d'un système de carburant (88) et de l'air dans un conduit de ventilateur (92), dans laquelle le fluide de travail (70) rejette de la chaleur vers le carburant dans le système de carburant (88) ou l'air dans le conduit de ventilateur (92) dans le condenseur (78) ;
dans laquelle, lorsque le second fluide (Y) est de l'air, l'aube directrice de sortie de ventilateur (82) est située dans le conduit de ventilateur (92), et le condenseur (78) rejette de la chaleur vers l'air passant par les aubes directrices de sortie de ventilateur (82) ; et
dans laquelle, lorsque le second fluide (Y) est du carburant en provenance d'un système de carburant (88), le condenseur (78) rejette de la chaleur vers le carburant dans le système de carburant (88).

2. Turbine à gaz selon la revendication 1, dans laquelle une différence de pression entre le fluide de travail (70) dans l'évaporateur (76) et le fluide de travail (70) dans le condenseur (78) conduit au déplacement du fluide de travail (70) à travers la pluralité de canaux (68) pour transporter la chaleur entre le condenseur (78) et l'évaporateur (76).

3. Turbine à gaz selon la revendication 1 ou la revendication 2 comprenant une vanne de remplissage (80) pour permettre au fluide de travail (70) d'être ajouté dans les canaux (68), et dans laquelle un système de régulation de pression (90) est de préférence connecté à la vanne de remplissage (80) pour permettre à une pression du fluide de travail (70) d'être modulée pour contrôler le point de saturation.

4. Turbine à gaz selon l'une quelconque des revendications 1 à 3, dans laquelle la pluralité de canaux (68) ont une dimension capillaire.

5. Turbine à gaz selon l'une quelconque des revendications 1 à 4, dans laquelle le fluide de travail (70) se trouve dans une biphase.

6. Procédé de refroidissement d'un premier fluide dans une turbine à gaz comprenant les étapes consistant à :
fournir un caloduc oscillant (62) comprenant une pluralité de canaux (68) qui définissent un circuit d'une boucle continue à travers laquelle circule un fluide de travail ;
faire circuler le fluide de travail (70) à travers un évaporateur (76) du caloduc oscillant (62) pour accepter la chaleur en provenance d'un premier fluide (X) situé à proximité ou dans un noyau de moteur ; dans lequel le premier fluide (X) est au moins l'un parmi de l'huile en provenance d'un système d'huile (86), de l'huile en provenance d'une boîte de vitesses (48) ou de l'air de prélèvement en provenance d'un compresseur haute pression (52), dans lequel le premier fluide (X) rejette de la chaleur vers le fluide de travail (70) dans l'évaporateur ; et
faire circuler le fluide de travail (70) à travers un condenseur (78) du caloduc oscillant (62) pour rejeter la chaleur du fluide de travail (70) dans un second fluide (Y) situé à l'extérieur du noyau de moteur ; dans lequel le condenseur (78) est situé sur une surface d'une aube directrice de sortie de ventilateur (82) ; et
dans lequel le second fluide (Y) est au moins l'un parmi du carburant en provenance d'un système de carburant (88) et de l'air dans un conduit de ventilateur (92), et dans lequel, lorsque le second fluide (Y) est de l'air, l'aube directrice de sortie de ventilateur (82) est située dans le conduit de ventilateur (92), et le condenseur (78) rejette de la chaleur vers l'air passant par les aubes directrices de sortie de ventilateur (82) ; dans lequel, lorsque le second fluide (Y) est du carburant en provenance d'un système de carburant (88), le condenseur (78) rejette de la chaleur vers le carburant dans le système de carburant (88).

7. Procédé selon la revendication 6, comprenant l'étape consistant à réguler la pression du fluide de travail (70) dans le caloduc oscillant (62).
